# EUROPÄISCHE PATENTSCHRIFT

(11) **EP 2 015 419 B1**
(45) Veröffentlichungstag und Bekanntmachung des Hinweises auf die Patenterteilung: **31.07.2013**
(21) Anmeldenummer: 08104404.2
(22) Anmeldetag: 13.06.2008
(51) Int. Cl.: H02H 3/347, G01R 31/08, G01R 25/00

(54) **Verfahren zum Zuordnen eines Fehlerstroms zu einer der drei Phasenleitungen eines Drei-Phasen-Systems sowie Fehlerstromschutzschalter**
Method for assigning a residual current to one of the three phase currents of a three-phase system and residual current protection switch
Procédé d'attribution d'un courant différentiel à l'une des trois conduites de phases d'un système triphasé et circuit de protection du courant différentiel

(30) Priorität: 13.07.2007 DE 102007032811
(43) Veröffentlichungstag der Anmeldung: 14.01.2009
(73) Patentinhaber: Siemens Aktiengesellschaft, 80333 München (DE)
(72) Erfinder: Martel, Jean-Mary, 93053 Regensburg (DE); Swawola, Mikael, 80636 München (DE); Wong Garcia, Sergio, 93047 Regensburg (DE)

(56) Entgegenhaltungen:
- EP-A1- 0 905 849
- GB-A- 2 258 095
- US-A- 3 891 895
- BRENNAN P V: "RESIDUAL CURRENT DEVICE WITH HIGH IMMUNITY TO NUISANCE TRIPPING", IEE PROCEEDINGS G. ELECTRONIC CIRCUITS & SYSTEMS, INSTITUTION OF ELECTRICAL ENGINEERS. STEVENAGE, GB, Bd. 140, Nr. 2 PART G, 1. April 1993 (1993-04-01), Seiten 140-144, XP000363835, ISSN: 0622-0039

## Beschreibung

Es ist bekannt, den Fehlerstrom mit Hilfe eines Summenstromwandlers zu erfassen, wobei (alle) Stromzufuhrleitungen und Stromabfuhrleitungen an einer Primärseite so geschaltet sind, dass der zu dem Verbrauchersystem, zu dem die Stromzufuhrleitungen Strom zuführen, fließende Strom ein Magnetfeld erzeugt, das genau von dem Magnetfeld ausgeglichen wird, das der über die Stromabfuhrleitungen fließende Strom erzeugt. Gibt es einen Fehlerstrom, ist der über die Stromabfuhrleitungen fließende Strom kleiner als der zu dem Verbrauchersystem fließende Strom, sodass sich die Magnetfelder nicht mehr gegenseitig vollständig ausgleichen. Das übrigbleibende Magnetfeld erzeugt an der Sekundärseite des Summenstromwandlers eine von Null verschiedene Spannung. Die Spannung an der Sekundärseite ist ein Maß für den Fehlerstrom. In herkömmlichen Fehlerstromschutzschaltern wird diese Spannung einem Mikrocontroller zugeführt, in dem ein Analog-Digital-Wandler sie in digitale Signale umwandelt, wo sie von einer Auswertelogik verarbeitet wird. Üblicherweise ist der Mikrocontroller dazu ausgelegt, ein Auslösesignal abzugeben, wenn die Spannung einen vorbestimmten Schwellwert überschreitet, und durch dieses Auslösesignal wird ein Stromunterbrecher aktiv, der den Stromfluss bei Auftreten eines Fehlerstroms unterbricht. Es gibt derartige Fehlerstromschutzschalter sowohl für herkömmliche Zwei-Leitungs-Systeme als auch für Drei-Phasen-Systeme mit drei Phasenleitungen und Masseleitung.

In der DE 198 26 410 A1 sind hierzu ein Verfahren und eine Vorrichtung zur Isolations- und Fehlerstromüberwachung beschrieben, wobei die Vorrichtung eine Lastabschaltung bewirkt, sobald eine oder mehrere Stromkomponenten, die aus dem sekundärseitigen Differenzstrom eines Summenstromwandlers extrahiert werden, vorgegebene Ansprechwerte überschreiten. Dabei wird in einer Ausführungsform mit Hilfe von Komparatoren und Zeitmessern die Phasenlage zwischen der Wechselstromkomponente des Differenzstroms und der Netzwechselspannung ermittelt, nur um daraus den Wirkstromanteil des Differenzstroms zu berechnen. Die Ausführungen in der DE 198 26 410 A1 beziehen sich zum überwiegenden Teil auf ein Wechselstromnetzwerk mit nur einem Phasenleiter. In einer erweiterten Ausführung für ein Dreiphasennetz wird ein Gesamtwirkstromanteil für alle drei Netzphasen ermittelt oder der betragsmäßig größte Wirkstromanteil der drei Netzphasen als Kriterium für eine Auslösung herangezogen.

Im Falle eines Dreiphasensystems kann es auch von Interesse sein, in welcher der drei Phasenleitungen der Fehler aufgetreten ist, der den Fehlerstrom verursacht. In der JP 06070 44 8 wird dazu ein Verfahren vorgestellt, das eine solche Zuordnung für Kurzschlüsse zwischen den Leitern eines Dreiphasensystems und dem Erdboden ermöglicht. Dieses Verfahren verwendet ein System, das markante Unregelmäßigkeiten im sinusförmigen Spannungsverlauf der Netzphasen und im Spannungsverlauf des Rückleiters analysiert, wie sie sich im Falle von Kurzschlüssen ergeben. Ein Summenstromwandler wird in diesem System nicht verwendet. Zudem lassen sich mit diesem System keine Fehler detektieren, welche durch Fehlerströme weit unterhalb der Kurzschlussstromstärke verursacht sind.

Die GB 2 258 095 A beschreibt eine Fehlerstrom-Schutzeinrichtung, die nur empfindlich gegenüber der resistiven Komponente und unempfindlich gegenüber der kapazitiven Komponente eines Leckstroms gegen Erde ist.

Aus dem Artikel "Residual current device with high immunity to nuisance tripping" von P. V. Brennan, veröffentlicht in IEEE Proceedings, Electronic Circuits & Systems, Bd. 140, Nr. 2, Part G, 1993 und der US 3,891,895 A ist jeweils ein Verfahren zum Zuordnen eines Fehlerstroms beschrieben, bei dem ein Fehlerstrom mit Hilfe eines Summenstromwandlers erfasst wird. Zudem wird einerseits der zeitlichen Abstandes zwischen dem Durchlaufen eines vorbestimmten Spannungswertes in den Phasenleitungen und andererseits dem Durchlaufen eines vorbestimmten Spannungswertes an der Sekundärseite des Stromwandlers erfasst. Des Weiteren wird der Phasenwinkel zu dem erfassten zeitlichen Abstand zugeordnet. Der Fehlerstrom wird zu einer Phasenleitung zugeordnet, wenn der zugeordnete Phasenwinkel mit einer vorgegebenen Genauigkeit mit dem Phasenwinkel der Spannung dieser Phasenleitung übereinstimmt oder der zugeordnete Phasenwinkel mit einer vorgegebenen Genauigkeit mit dem um 90° reduzierten Phasenwinkel der Spannung in dieser Phasenleitung übereinstimmt .

Dieser Artikel "Residual current device..." formt den Oberbegriff des Patentanspruchs 1.

Es ist Aufgabe der vorliegenden Erfindung, ein Verfahren bereitzustellen, mit Hilfe dessen der über einen Summenstromwandler ermittelte Fehlerstrom eindeutig einer der drei Phasenleitungen zugeordnet werden kann (wenn er auf einem Defekt in einer der Phasenleitungen beruht).

Die Aufgabe wird durch ein Verfahren mit den Merkmalen gemäß Patentanspruch 1 gelöst.

Das erfindungsgemäße Verfahren umfasst somit folgende Schritte:
a) Erfassen des Fehlerstroms mit Hilfe eines Summenstromwandlers, bei dem Stromzufuhrleitungen und Stromabfuhrleitungen an einer Primärseite so geschaltet sind, dass beim Auftreten eines Fehlerstroms an einer Sekundärseite eine von Null verschiedene Spannung erzeugt wird,
b) Erfassen des zeitlichen Abstandes zwischen dem Durchlaufen eines vorbestimmten Spannungswertes in den drei Phasenleitungen (gegebenenfalls jeweils) einerseits und dem Durchlaufen eines vorbestimmten Spannungswertes an der Sekundärseite des Summenstromwandlers andererseits,
c) Zuordnen eines Phasenwinkels zu dem erfassten zeitlichen Abstand,
d) Zuordnen des Fehlerstroms zu einer Phasenleitung, wenn erfüllt ist
entweder:
Kriterium 1, dass der zugeordnete Phasenwinkel mit einer vorgegebenen Genauigkeit mit dem Phasenwinkel der Spannung in dieser Phasenleitung übereinstimmt, wobei die vorgegebene Genauigkeit zwischen ± 2° und ± 20° beträgt (bevorzugt ± 10°),
   oder:
Kriterium 2, dass der zugeordnete Phasenwinkel mit einer vorgegebenen Genauigkeit mit dem um 90° reduzierten Phasenwinkel der Spannung in dieser Phasenleitung übereinstimmt, wobei die vorgegebene Genauigkeit zwischen ± 0,5° und ± 5° beträgt (bevorzugt ± 2°).

Man kann sich auf das Ergebnis des erfindungsgemäßen Verfahrens nur dann verlassen, wenn der Fehlerstrom nicht allzu hoch ist, sonst können diagnostische Fehler auftreten. Daher gehört es zum erfindungsgemäßen Verfahren, dass erfasst wird, ob der Fehlerstrom kleiner als ein Grenzwert ist, der z. B. zwischen 50 und 300 mA liegt (bevorzugt bei 100mA), und nur wenn dies der Fall ist, soll das Ergebnis von Schritt d) als zuverlässig behandelt werden. Die Behandlung als zuverlässig kann sich dahin ausdrücken, dass nur dann die oben genannte Anzeige an die Bedienperson erfolgt.

Zum Erfassen des zeitlichen Abstandes dienen bevorzugt in den Phasenleitungen die Spannungsnulldurchgänge und bei der Spannung an der Sekundärseite des Summenstromwandlers ebenfalls deren Nulldurchgänge.

Der zeitliche Abstand kann jeweils paarweise ermittelt werden. Da die Phasen um 120° beabstandet sind, genügt die Verortung des Fehlerstroms relativ zu den Phasen: wird der zeitliche Abstand einmal zwischen der einen Phase und dem Fehlerstrom ermittelt, ergeben sich die anderen zeitlichen Abstände automatisch.

Zum Aussuchen des zum Fehlerstrom führenden Fehlers sollte die Bedienperson das Ergebnis des Verfahrens kennen. Dementsprechend wird bevorzugt auf einer Anzeige angezeigt, welche Phasenleitung in Schritt d) zugeordnet wurde. Es kann auch angezeigt werden, ob diese aufgrund von Kriterium 1 oder Kriterium 2 zugeordnet wurde.

Kriterium 1 gibt es deswegen, weil bei Defekten in der eigentlichen Phasenleitung üblicherweise Widerstandsänderungen auftreten, mit wenn überhaupt nur geringem induktiven Anteil. Kriterium 2 gibt es, weil Fehlerströme auch als Kriechströme erzeugt werden können, d.h. auf eine kapazitive Kopplung zurückgehen können. Die kapazitive Kopplung ist an sich unschädlich, während ein Fehlerstromschutzschalter aktiv werden sollte, wenn ein resistiver Defekt in einer der Phasenleitungen auftritt. Demgemäß wird der Stromfluss beim Erfülltsein von Kriterium 1 unterbrochen, beim Erfülltsein von Kriterium 2 jedoch nicht.

Fehlerströme kommen regelmäßig durch Verschlechterung der Isolation zustande. Da dies graduell erfolgt, steigt der Fehlerstrom langsam an. Diese sogenannten Ableitströme sind daher durch Analysieren des Fehlerstroms, insbesondere seiner zeitlichen Ableitung, als solche erkennbar. Die erfindungsgemäß erfasste Information, welche Phasenleitung defekt ist, ist nur in dem Falle sinnvoll, dass der Fehlerstrom ein Ableitstrom ist, sodass auch ein diesbezügliches Kriterium eingesetzt werden kann, also eine Analyse des Fehlerstroms daraufhin, ob er ein Ableitstrom ist oder nicht, durchgeführt wird.

Nachfolgend wird eine bevorzugte Ausführungsform der Erfindung unter Bezug auf die Zeichnung beschrieben, wobei
FIG 1 die Ableitung von Rechtecksignalen aus dem Stromverlauf in einer Phasenleitung veranschaulicht,
FIG 2 die Schaltung veranschaulicht, die die Ableitung der Rechtecksignale gemäß Fig. 1 bei einer bevorzugten Ausführungsform bewirkt, und
FIG 3 verschiedene Bereiche des Phasenwinkels im Phasendiagramm veranschaulicht, die so gewählt sind, dass die Phasenleitung eindeutig zugeordnet werden kann, bei der ein Fehlerstrom auftritt, wenn die Phase des Fehlerstroms in einen der Bereiche fällt.

In einem Messgerät, das bevorzugt zugleich die Funktion eines Fehlerstromschutzschalters hat, soll, wenn ein Fehlerstrom auftritt, erfasst werden, welcher von drei Phasenleitungen eines Drei-Phasen-Systems der Fehlerstrom zugeordnet ist, damit eine Bedienperson weiß, an welcher der Phasenleitungen der Fehler zu suchen ist, der den Fehlerstrom hervorruft.

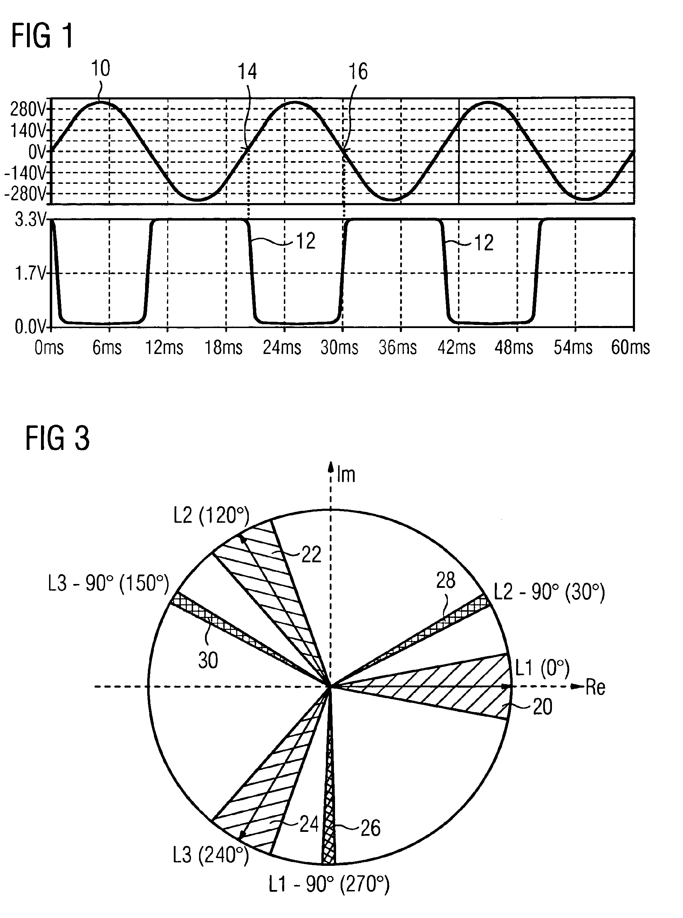

Das im folgenden beschriebenen Verfahren beruht auf der Erkenntnis, dass bei typischen Fehlern des Verbrauchersystems, bei dem Fehlerströme auftreten, die Fehlerströme periodisch mit der über die Phasenleitungen zugeführten Spannungen mitschwingen. Bei resistiven Fehlern in einer bestimmten Phasenleitung ist die Phase des Phasenwinkels des Fehlerstroms gleich oder nahezu gleich dem Phasenwinkel des Fehlerstroms in dieser Phasenleitung, und bei kapazitiven Fehlern, welche zu Kriechströmen führen, beträgt eine Phasendifferenz ca. 90°. Es muss nun in irgendeiner Weise der Phasenwinkel der Spannung in den drei Phasenleitungen dem Phasenwinkel des Fehlerstroms zuordenbar sein. Dies geschieht am einfachsten anhand der Nulldurchgänge der Spannung. Fig. 1 zeigt das übliche Spannungssignal 10. Aus diesem soll eine Folge von Rechtecksignalen 12 erzeugt werden, und zwar soll das Rechtecksignal bei einem Nulldurchgang 16 bei absteigender Spannung jeweils beginnen und bei einem Nulldurchgang 14 bei aufsteigender Spannung jeweils enden.

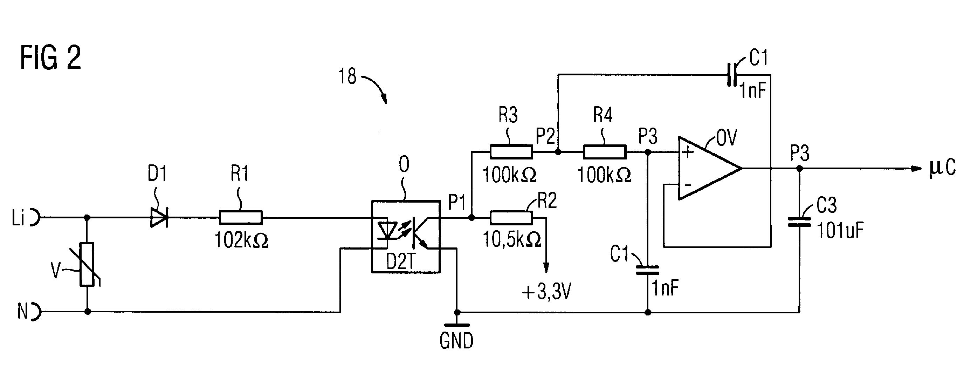

Ein solches Rechtecksignal 12 erhält man mit Hilfe der in Fig. 2 gezeigten Schaltung. Die im Ganzen mit 18 bezeichnete Schaltung ist eingangsseitig mit einer der drei Phasenleitungen Li, i=1,2,3 und der Masseleitung N verbunden. Eine Gleichrichterdiode D1 lässt nur die positive Wellenhälfte des Signals 10 durch. Ein Widerstand R1 dient zur Strombegrenzung, und zwar sind die Eingänge Li und N über einen Optokoppler O miteinander verbunden, sodass ein Strom fließt. Ein Optokoppler besteht bekanntlich aus einer Fotodiode D2 und einem Fototransistor T, wobei der Fototransistor T über einen Widerstand R2 von 10,5 kΩ mit einem Bezugspotenzial von 3,3 V gekoppelt ist. Auf der anderen Seite ist er mit Masse ("GND") verbunden. Der durch die Fotodiode D2 in Rechteckpulsen fließende Strom bewirkt bei jedem Rechteckpuls, dass der Fototransistor T durchlässig wird und auf der Ausgangsseite des Optokopplers O ein Strom fließt, der ebenfalls rechteckförmig gepulst ist. Beim Punkt P1 ändert sich dann die Spannung ausgehend von 3,3 V bei Abwesenheit eines Pulses zu einem niedrigeren Wert von fast 0 V. Vom Punkt P1 zweigt eine Schaltung mit einem Spannungsteiler aus 100 kΩ-Widerständen R3 und R4 ab, wobei der Mittelabgriff P2 des Spannungsteilers über einen Kondensator C1 mit einer Kapazität von 1 nF mit einem Ausgang P3 eines Operationsverstärkers OV verbunden ist. Der Spannungsteiler ist an seinem Endpunkt P4 mit dem positiven Eingang des Operationsverstärkers verbunden und gleichzeitig über einen Kondensator C2 der Kapazität von 1 nF mit Masse verbunden. P3 ist direkt mit dem negativen Eingang des Operationsverstärkers verbunden. P3 ist außerdem über einen Kondensator C3 mit einer Kapazität von 101 nF mit Masse verbunden. Die Anordnung aus dem Spannungsteiler mit den Kondensatoren C1 und C2 und dem Operationsverstärker funktioniert als aktiver Filter, nämlich als Tiefpass mit einer Grenzfrequenz von 2 kHz.

Der Ausgang des Operationsverstärkers P3 wird einem Mikrokontroller des Messgeräts zugeführt. Dem selben Mikrokontroller wird eine dem Fehlerstrom entsprechende Spannung zugeführt, und zwar in an sich bekannter Weise unter Verwendung eines Summenstromwandlers, wie es herkömmlichen Fehlerstromschutzschaltern bekannt ist.

Die Schaltung 18 wird zumindest zweifach, wenn nicht dreifach in dem Messgerät eingesetzt, jeweils an eine andere Phasenleitung Li angeschlossen. Aus den Rechtecksignalen kann der Mikrokontroller, wenn er die Signale von zwei Schaltungen 18 empfängt, virtuell das Signal einer dritten Schaltung errechnen, denn die Phasen auf den Phasenleitern Li stehen ja in vorbestimmter Beziehung. Die Schaltung 18 funktioniert in Echtzeit. Auch der Summenstromwandler arbeitet in Echtzeit. Daher kann der Mikrocontroller, der Nulldurchgänge des Summenstroms anhand der ihm zugeführten Spannung erkennt, diese Nulldurchgänge in direkte Beziehung zu den Nulldurchgängen setzen, die durch die Rechteckpulse am Ausgang der Schaltung 18 gekennzeichnet sind. Aus dem zeitlichen Abstand lässt sich ein Phasenwinkel ermitteln.

Fig. 3 zeigt ein Phasendiagramm. Eingezeichnet ist die Phase auf der Phasenleitung L1, nämlich 0°, die Phase auf der Phasenleitung L2, nämlich 120° und die Phase auf der Phasenleitung L3, nämlich 240°. Man könnte annehmen, dass der Phasenwinkel des Fehlerstroms einen beliebigen Wert zwischen 0° und 360° einnimmt. Dies ist aber unzutreffend. Vielmehr gilt Folgendes: Geht der Fehlerstrom auf einen resistiven Defekt in der Phasenleitung L1 zurück, so beträgt der Phasenwinkel des Fehlerstroms ungefähr 0°, jedenfalls liegt der Phasenwinkel des Fehlerstroms in einem Bereich 20 von 0° ± 10°. Genauso liegt der Phasenwinkel des Fehlerstroms, wenn selbiger auf ein Defekt in der Phasenleitung L2 zurückzuführen ist, in einem Bereich 22 um den Phasenwinkel um 120° herum, nämlich in einem Bereich von 120° ± 10°. Geht der Fehlerstrom auf einen Fehler in der Phasenleitung L3 zurück, liegt der Phasenwinkel im Bereich 24 von 240° ± 10°.

Geht der Fehlerstrom als Kriechstrom auf eine parasitäre Kapazität zurück, so liegt der Phasenwinkel um 90° hinter dem Phasenwinkel derjenigen Phasenleitung zurück, an bzw. zu der die parasitäre Kapazität ausgebildet ist. Es lassen sich Bereiche 26, 28, und 30 definieren, in der der Phasenwinkel des Fehlerstroms dann liegt. Die Bereiche haben eine Breite von 4°, wobei der Bereich 26 sich von 270° ± 2° erstreckt, der Bereich 28 sich von 30° ± 2° und der Bereich 30 sich von 150° ± 2° erstreckt.

Durch die Messung des Phasenwinkels des Fehlerstroms relativ zu den einzelnen Phasen der Spannung in den Phasenleitungen L1, L2, L3 kann somit eine eindeutige Aussage über die Ursache des Fehlerstroms getroffen werden, wenn diese resistiv oder kapazitiv ist. Bei induktiven Defekten funktioniert das Verfahren nicht eindeutig. Das Messgerät hat nun eine Anzeige, auf der angezeigt wird, in welchem Bereich der Bereiche 20, 22 , 24, 26, 28 oder 30 sich der Phasenwinkel befindet bzw. an welcher Phasenleitung der Phasenleitungen L1, L2, L3 nach dem Fehler zu suchen ist und welcher Art der Fehler ist (ob resistiv oder kapazitiv). Sollte der Phasenwinkel des Fehlerstroms außerhalb der vorgenannten Bereiche liegen, wird auf der Anzeige angezeigt, dass die Fehlerursache nicht zu ermitteln ist.

Im Falle eines resistiven Fehlers, wenn also der Phasenwinkel in einen der Bereiche 20, 22, 24 fällt, sollte der Fehlerstrom unterbrochen werden, was ein geeigneter Fehlerstromschutzschalter, der das erfindungsgemäße Messverfahren durchführen kann, also die Schaltung 18 umfasst, mit Hilfe seines Mikrocontrollers bewirken kann, der eine Stromunterbrechung ansteuert. Der Fehlerstrom braucht nicht unterbrochen zu werden, wenn der Fehler kapazitiv ist, also der Phasenwinkel in einen der Bereiche 26, 28 oder 30 fällt.

### Bezugszeichenliste

- 10: Spannungssignal
- 12: Rechtecksignal
- 14,16: Nulldurchgang
- 18: Schaltung
- 20,22,24,26,28,30: Bereiche im Phasendiagramm
- C1,C2,C3: Kondensator
- D1,D2: Gleichrichterdiode
- Li: Phasenleitung
- L1,L2,L3: Phasenleitung
- N: Masseleitung
- O: Optokoppler
- P1,P2,P3,P4: Punkte in der Schaltung 18
- T: Fototransistor

## Patentansprüche

1. Verfahren zum Zuordnen eines Fehlerstroms zu einer der Phasenleitungen, mit den Schritten:
a) Erfassen des Fehlerstroms in der Phasenleitung mit Hilfe eines Summenstromwandlers, bei dem Stromzufuhrleitungen und Stromabfuhrleitungen an einer Primärseite des Summenstromwandlers so geschaltet sind, dass beim Auftreten eines Fehlerstroms eine von Null verschieden Spannung an einer Sekundärseite des Summenstromwandlers erzeugt wird,
b) Erfassen des zeitlichen Abstandes zwischen dem Durchlaufen eines vorbestimmten Spannungswertes in den Phasenleitungen einerseits und dem Durchlaufen eines vorbestimmten Spannungswertes an der Sekundärseite des Stromwandlers andererseits;
c) Zuordnen eines Phasenwinkels zu dem erfassten zeitlichen Abstand,
d) Zuordnen des Fehlerstroms zu einer Phasenleitung, wenn erfüllt ist
entweder:
Kriterium 1, dass der zugeordnete Phasenwinkel mit einer vorgegebenen Genauigkeit mit dem Phasenwinkel der Spannung dieser Phasenleitung übereinstimmt,
oder:
Kriterium 2, dass der zugeordnete Phasenwinkel mit einer vorgegebenen Genauigkeit mit dem um 90° reduzierten Phasenwinkel der Spannung in dieser Phasenleitung übereinstimmt,
**dadurch gekennzeichnet, dass**
der Fehlerstrom einer der drei Phasenleitungen eines DreiPhasen-Systems zugeordnet wird, die vorgegebene Genauigkeit beim Kriterium 1 zwischen ± 2° und ± 20° beträgt, die vorgegebene Genauigkeit beim Kriterium 2 zwischen ± 0,5° und ± 5° beträgt und erfasst wird, ob der Fehlerstrom kleiner als ein Grenzwert ist, und nur dann das Ergebnis von Schritt d) als zuverlässig behandelt wird.

2. Verfahren nach Anspruch 1, bei dem das Erfassen des zeitlichen Abstandes durch Inbeziehungsetzen der Spannungsnulldurchgänge (14, 16) der Phasen zu den Spannungsnulldurchgängen an der Sekundärseite des Stromwandlers erfolgt.

3. Verfahren nach Anspruch 1 oder 2, bei dem auf einer Anzeige angezeigt wird, welche Phasenleitung in Schritt d) zugeordnet wurde.

4. Verfahren nach einem der vorgehenden Ansprüche, bei dem der Stromfluss beim Erfülltsein von Kriterium 1 unterbrochen wird und beim Erfülltsein von Kriterium 2 nicht.

5. Verfahren nach einem der vorgehenden Ansprüche, bei dem der Grenzwert für den Fehlerstrom zwischen 50 und 300 mA liegt.

6. Verfahren nach einem der vorgehenden Ansprüche, bei dem das Ergebnis von Schritt d) dann als zuverlässig behandelt wird, wenn eine Analyse des Fehlerstroms, insbesondere seiner zeitlichen Ableitung, ergibt, dass der Fehlerstrom ein Ableitstrom ist.

## Claims

1. Method for assigning a residual current to one of the phase lines, having the steps:
a) detecting the residual current in the phase line with the aid of a summation current transformer, in which current supply lines and current discharge lines are connected on a primary side of the summation current transformer such that upon appearance of a residual current, a voltage which differs from zero is generated on a secondary side of the summation current transformer,
b) detecting the temporal interval between the passage of a predetermined voltage value in the phase lines on the one hand and the passage of a predetermined voltage value on the secondary side of the current converter;
c) assigning a phase angle to the detected temporal interval
d) assigning the residual current to a phase line, if either criterion is fulfilled:
criterion 1, that the assigned phase angle corresponds to a predetermined accuracy with the phase angle of the voltage of this phase line
or:
criterion 2, that the assigned phase angle corresponds to a predetermined accuracy with the phase angle of the voltage in this phase line which is reduced by 90°,
**characterised in that**
the residual current is assigned to one of the three phase lines of a three-phase system, the predetermined accuracy with criterion 1 amounts to between ± 2° and ± 20°, the predetermined accuracy with criterion 2 amounts to between ± 0.5° and ± 5° and it is detected whether the residual current is less than a limit value and only then is the result of step d) treated as reliable.

2. Method according to claim 1, in which the temporal interval is detected by correlating the voltage zero crossing points (14, 16) of the phases with the voltage zero crossing points at the secondary side of the transformer.

3. Method according to claim 1 or 2, wherein it is indicated on a display, which phase line was assigned in step d).

4. Method according to one of the preceding claims, in which upon fulfilment of criterion 1 the current flow is interrupted, and upon fulfilment of criterion 2, the current flow is not interrupted.

5. Method according to one of the preceding claims, in which the limit value for the residual current lies between 50 and 300 mA.

6. Method according to one of the preceding claims, wherein the result of step d) is then treated as reliable if an analysis of the residual current, in particular its temporal derivation results in the residual current being a leakage current.

## Revendications

1. Procédé d'attribution d'un courant différentiel résiduel à une des lignes de phase, comprenant les étapes :
a) d'acquisition du courant différentiel résiduel dans la ligne de phase à l'aide d'un transformateur de courant cumulé, dans lequel des lignes d'amenée de courant et des lignes d'évacuation de courant sont branchées au niveau d'un côté primaire du transformateur de courant cumulé, de sorte que lors de l'apparition d'un courant différentiel résiduel une tension différente de zéro est générée au niveau d'un côté secondaire du transformateur de courant cumulé,
b) d'acquisition de l'intervalle de temps entre le passage d'une valeur de tension prédéterminée dans les lignes de phase d'une part et le passage d'une valeur de tension prédéterminée au niveau du côté secondaire du transformateur de courant d'autre part,
c) d'attribution d'un angle de phase à l'intervalle de temps acquis,
d) d'attribution du courant différentiel résiduel à une ligne de phase, lorsque l'on remplit
soit :
le critère 1 : l'angle de phase attribué coïncide avec une précision prédéfinie avec l'angle de phase de la tension de cette ligne de phase,
soit :
le critère 2 : l'angle de phase attribué coïncide avec une précision prédéfinie avec l'angle de phase réduit de 90° de la tension dans cette ligne de phase,
**caractérisé en ce que**
le courant différentiel résiduel est attribué à l'une des trois lignes de phase d'un système triphasé, la précision prédéfinie dans le critère 1 se situe entre ± 2° et ± 20°, la précision prédéfinie dans le critère 2 se situe entre ± 0,5° et ± 5° et on établit si le courant différentiel résiduel est inférieur à une valeur limite, et ce n'est qu'à ce moment-là que le résultat de l'étape d) est considéré comme fiable.

2. Procédé selon la revendication 1, dans lequel l'acquisition de l'intervalle de temps s'effectue par la corrélation des commutations au moment de tension zéro (14, 16) des phases avec les commutations au moment de tension zéro au niveau du côté secondaire du transformateur de courant.

3. Procédé selon la revendication 1 ou 2, dans lequel il est signalé sur un écran quelle ligne de phase a été attribuée lors de l'étape d).

4. Procédé selon l'une des revendications précédentes, dans lequel le flux de courant est interrompu lorsque le critère 1 est rempli et ne l'est pas lorsque le critère 2 est rempli.

5. Procédé selon l'une des revendications précédentes, dans lequel la valeur limite pour le courant différentiel résiduel se situe entre 50 et 300 mA.

6. Procédé selon l'une des revendications précédentes, dans lequel le résultat de l'étape d) est ensuite considéré comme fiable si une analyse du courant différentiel résiduel, en particulier sa dérivation dans le temps, indique que le courant différentiel résiduel est un courant de fuite.
